# EUROPEAN PATENT SPECIFICATION

(11) **EP 2 656 485 B1**
(45) Date of publication and mention of the grant of the patent: **27.05.2015**
(21) Application number: 11808959.8
(22) Date of filing: 22.12.2011
(51) Int. Cl.: H02K 3/28, H02P 6/08, H02P 25/18, H02K 7/14

(54) **ELECTRIC POWER TOOL**
ELEKTROWERKZEUG
OUTIL ÉLECTRIQUE

(30) Priority: 23.12.2010 JP 2010286831
(43) Date of publication of application: 30.10.2013
(73) Proprietor: Hitachi Koki Co., Ltd., Tokyo 108-6020 (JP)
(72) Inventor: UCHIDA, Hiroki, Ibaraki 312-8502 (JP); TAKEDA, Takeshi, Ibaraki 312-8502 (JP); KISHIMA, Yuji, Ibaraki 312-8502 (JP)
(74) Representative: Popp, Eugen
(86) International application number: PCT/JP2011/080563
(87) International publication number: WO 2012/086852

(56) References cited:
- EP-A1- 1 389 827
- GB-A- 2 232 305
- JP-A- 10 126 993
- US-A1- 2001 006 292
- US-A1- 2007 210 733
- US-A1- 2010 164 420

## Description

### Technical Field

Aspects of the present invention relate to an electric power tool using a motor including a coil. In particular, aspects of the present invention relate to an electric power tool including a motor including two or more kinds of coils, where driving of the motor is controlled by switching the coil to be used in accordance with work situations.

### Background Art

Recently, a brushless motor has been used in an electric power tool that performs required works by rotating a front-end tool, such as a drill or a driver, with a motor. The brushless motor is, for example, a DC (Direct Current) motor that does not have a commutating brush. In the brushless motor, a coil (windings) is used at the stator side and a permanent magnet is used at the rotor side, and the rotor is rotated by sequentially applying the predetermined coil with a voltage generated by an inverter circuit. A switching element for switching supplying or not supplying electricity to the coil wound on the stator is disposed on a circuit board provided near the brushless motor. For example, the switching element is disposed on a substantially circular circuit board attached to the rear side (opposite to the front-end tool) of the brushless motor, in JP 4487836 B.

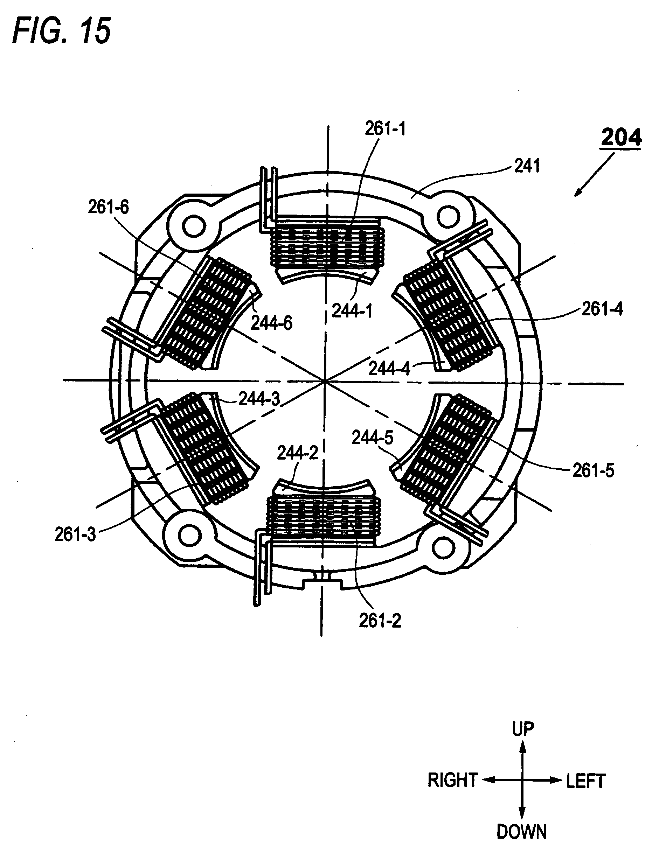

FIG. 15 shows the structure of a stator of a motor used in an electric power tool of related art. A stator 204 includes a stator core 241 and coils 261-1 to 261-6 wound on a plurality of teeth 244-1 to 244-6 formed to the stator core 241. The stator core 241 is manufactured to have a substantially cylindrical outer shape by axially stacking several sheets of thin metal plates such as steel plates and is provided with the teeth 244-1 to 244-6 radially extending inward from the cylinder portion with predetermined intervals along the circumference. The innermost portions of the teeth 244-1 to 244-6 are formed in an arc shape with a small gap being spaced apart from a cylindrical stator (not shown), and the coils 261-1 to 262-6 are formed by winding copper wires a predetermined number of times on the teeth 244-1 to 244-6. Although connecting lines are not shown between the coils 261-1 to 261-6 in FIG. 15, opposite coils are connected with each other, such that the coils 261-1 and 261-2 form U-phase, the coils 261-3 and 261-4 form V-phase, and the coils 261-5 and 261-6 form W-phase. One side of each of the U-phase, V-phase, and W-phase is connected to a predetermined switching element of an inverter circuit and the other side thereof is connected with each other.

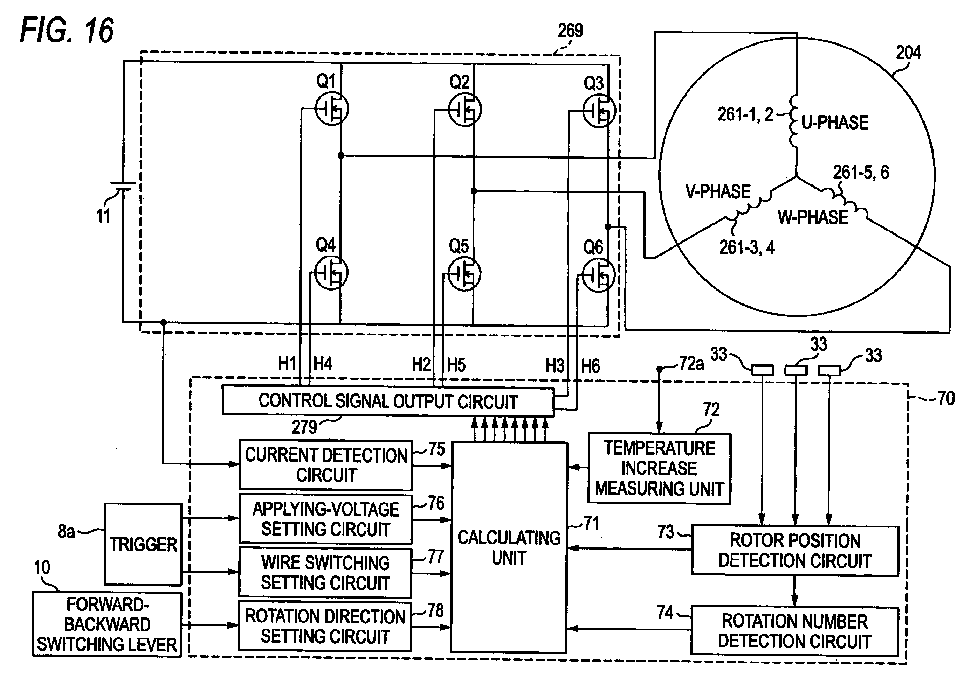

FIG. 16 is a block diagram showing the circuit configuration of a driving control system of a motor according to the related art. Three position detection elements 33 are circumferentially disposed with predetermined intervals, for example, at 60 degrees, around a rotor 5 that is rotated by the stator including the star-connected coil 261 (U-phase, V-phase, and W-phase) in order to detect a rotational position. An inverter circuit 269 is controlled based on rotational position detection signals from the position detection elements 33, and the electrical conduction direction and time for the stator windings (U-phase, V-phase, and W-phase) are controlled, thereby rotating the motor.

In the electronic components included in the inverter circuit 269, six switching elements Q1 to Q6, such as Field Effect Transistors (FETs) connected in a three-phase bridge type, are included. The gates of the six switching elements Q1 to Q6, which can be connected in a bridge type, are connected to a control signal output circuit 279 while the drains or the sources of the switching elements Q1 to Q6 are connected to the U-phase, V-phase, and W-phase of the star-connected stator windings. Accordingly, the switching elements Q1 to Q6 are switched by switching element driving signals (driving signals of H4, H5, and H6) inputted from the control signal output circuit 279, and DC voltage of a battery 11 which is applied to the inverter circuit 269 is supplied to the stator windings U-phase, V-phase, and W-phase as three-phase (U-phase, V-phase, and W-phase) voltage Vu, Vv, and Vw.

A calculating unit 71 supplies three negative power side switching elements Q4, Q5, and Q6 among the switching element driving signals (three-phase signals) driving the gates of the six switching elements Q1 to Q6, as pulse width modulation signals (PWM signals) H4, H5, and H6, in accordance with the manipulation amount (stroke) of a trigger 8a. Further, the calculating unit 71 adjusts the amount of power supply for the motor 3 by changing the pulse widths (duty, ratio) of the PWM signals based on detection signals of the manipulation amount (stroke) of the trigger 8a. Power tools, where the coils are selected for adjusting the torque-speed characteristics of the motor drive, are, for example, described in documents US 2007210733 and JP 10126993.

### Summary of Invention

### Technical Problem

In the motor of the related art, the coils 261-1 to 261-6 are wound on the teeth 244-1 to 244-6, respectively, and connected to, for example, an inverter circuit. In a rotational control of a motor, a precise control is performed by controlling the inverter circuit with the PWM, using a microcomputer. However, in the rotation control of the motor of the related art, only electric controls such as changing the timing of the driving voltage supplied to the U-phase, V-phase, and W-phase and changing the situation of the PWM control were performed.

The present invention has been made in view of the above-described background. An object of the present invention is to provide an electric power tool that includes a motor including a plurality of coils and controls the motor by efficiently switching between the coils.

Another object of the present invention is to provide an electric power tool that includes a motor including a plurality of coils, where coils of the motor can be automatically switched in accordance with the pulling amount of a switch trigger.

Another object of the present invention is to provide an electric power tool that realizes a broad control range of a motor by combining switching control of coils with PWM control, using a brushless DC motor including a plurality of coils.

### Solution to Problem

These objects are solved by the features of independent claim 1. The dependent claims recite advantageous embodiments of the invention.

### Advantageous Effects of Invention

As a first advantage, since the first coil and the second coil are provided to the teeth and the control unit controls supply of driving voltage to the first coil and the second coil in accordance with the pulling amount of the trigger switch, it is possible to change the characteristics of the motor in accordance with the position of the trigger switch. Therefore, it is possible to realize an electric power tool that a worker can easily use.

As a second advantage, the motor includes a stator having the first and second coils including different number of turns on the teeth, and a switch configured to switch the conduction between the first coil and the second coil. Accordingly, it is possible to switch the coils to be conducted by the switch, such that the characteristics of the motor can be changed by the switch.

As a third advantage, since the first coil and the second coil are both wound on the teeth, it is possible to realize an electric power tool having a compact structure.

### Brief Description of Drawings

FIG. 1 is a cross-sectional view showing the internal structure of an impact driver 1 according to an exemplary embodiment of the present invention;
FIG. 2 is a side view showing the external appearance of the impact driver 1 according to the exemplary embodiment;
FIG. 3 is a front view of a stator 4 of a motor 3 shown in FIG. 1;
FIG. 4 is a flowchart showing the control procedure of the impact driver 1 according to the exemplary embodiment;
FIG. 5 is a block diagram showing the circuit configuration of a driving control system of the impact driver 1 according to the exemplary embodiment;
FIG. 6 is a schematic block diagram showing the control procedure of the switching coils of the motor 3 according to the exemplary embodiment;
FIG. 7 is a circuit diagram showing the internal structure of a switch circuit 8 according to the exemplary embodiment (when the pulling amount of a trigger is small);
FIG. 8 is a view showing a path for supplying driving power to the coils in the state shown in FIG. 7;
FIG. 9 is a circuit diagram showing the internal structure of the switch circuit 8 according to the exemplary embodiment (when the pulling amount of a trigger is large);
FIG. 10 is a view showing a path for supplying driving power to the coils in the state shown in FIG. 9;
FIG. 11 is a block diagram showing the circuit configuration of a driving control system of the motor 3 according to a second exemplary embodiment of the present invention;
FIG. 12 is a schematic block diagram showing the control procedure of switching coils of the motor 3 according to the second exemplary embodiment of the present invention;
FIG. 13 is a view showing a path for supplying driving power to the coils in the second exemplary embodiment;
FIG. 14 is another view showing a path for supplying driving power to the coils in the second exemplary embodiment;
FIG. 15 is a front view of the stator of the motor 3 in a electric power tool of the related art; and
FIG. 16 is a block diagram showing the circuit configuration of a driving control system in the electric power tool of the related art.

### Description of Embodiment

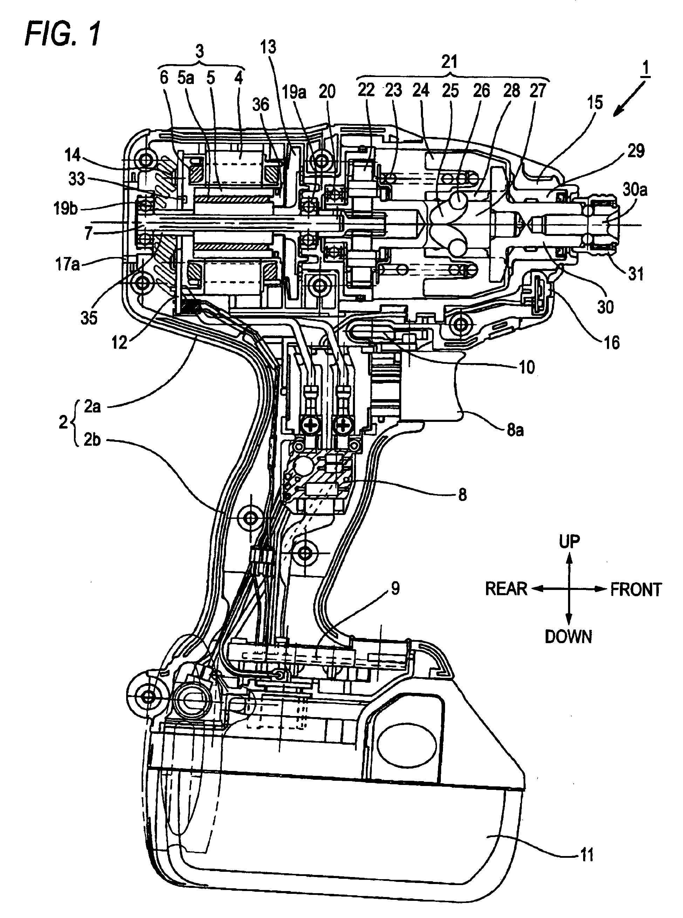

Exemplary embodiments of the present invention are described hereinafter with reference to the drawings. In the following description, it is assumed that the up-down direction and the front-rear direction correspond to the directions defined in the drawings. FIG. 1 is a view showing the internal structure of an electric power tool, which is an exemplary embodiment of an electric power tool according to the present invention. An impact driver 1 is exemplified as an electric power tool in the present exemplary embodiment.

The impact driver 1 applies a rotation force and a hitting force to an anvil 30, which is an output shaft, by operating a rotating-hitting mechanism 21 using a chargeable battery 11 as a power source and a motor 3 as a driving source. The impact driver 1 performs a screw-tightening operation or a bolt-tightening operation by intermittently transmitting a rotating-hitting force to a front-end tool (not shown), such as a driver bit, which is held in a mounting hole 30a covered by a sleeve 31.

The motor 3 is a brushless DC motor, which is a so-called four-pole and six-slot motor in which two sets of permanent magnets are disposed on the inner circumferential surface and a stator 4 with six slots is disposed on the outer circumferential surface. Meanwhile, the present invention is not limited to the four-pole and six-slot motor and other motors having different numbers of poles and slots may also be used. The motor 3 is accommodated in a cylindrical body 2a of a housing 2 having a substantially T-shape in a side view. A rotary shaft 7 of the motor is rotatably held by a bearing 19a disposed near a center of the body 2a of the housing 2 and a bearing 19b disposed at a rear end of the body 2a of the housing 2. A rotor fan 13 that is fitted on the same shaft as the rotary shaft 7 and rotates in synchronization with the motor 3 is disposed ahead of the motor 3, and an inverter circuit board 12 for driving the motor 3 is disposed behind the motor 3.

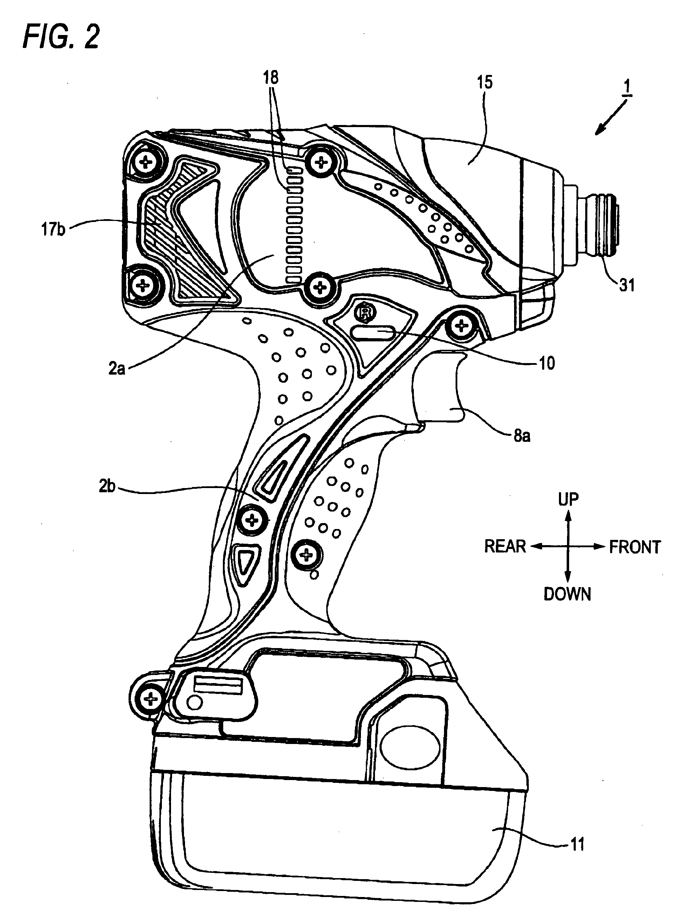

An air flow is generated by the rotor fan 13 and is introduced into the body 2a from an air intake port 17a and a slit (slit 17b in FIG. 2) which is formed at the housing around the inverter circuit board 12 and will be described later. The introduced air flow pass mainly through between the rotor 5 and the stator 4, and is sucked from the rear side of the rotor fan 13 to flow in the radial direction of the rotor fan 13. The air flow is then discharged to the outside of the housing 2 from a slit (slit 18 in FIG. 2) which is formed at the housing around the rotor fan 13 and will be described later. The inverter circuit board 12 is a substantially circular double-sided substrate having substantially the same shape as the external shape of the motor 3, and a plurality of switching elements 14, such as FETs (Field Effect Transistors), and position detection elements 33, such as hole ICs, are mounted on the board.

The sleeve 36 and the rotor fan 13 are fitted on the same shaft as the rotary shaft 7, between the rotor 5 and the bearing 19a. The rotor 5 includes a magnet 5a that generates a magnetic path. The sleeve 36 may be made of, for example, plastic or metal, but when it is made of metal, it is preferable that it is made of a non-magnetic body that does not influence the magnetic path of the rotor 5. A groove for correcting the balance is formed on the outer circumferential surface of the sleeve 36, when necessary.

The rotor fan 13 is integrally formed by, for example, a plastic mold, and is a centrifugal fan that sucks air from the rear inner circumferential portion and discharges the air to the radially outside at the front portion. A plastic spacer 35 is disposed between the rotor 5 and the bearing 19b. The spacer 35 has a substantially cylindrical shape and defines a gap between the bearing 19b and the rotor 5. The gap is important for coaxially disposing the inverter circuit board 12 and defining a space necessary for a channel of the air flow that cools the switching elements 14.

A trigger 8a is disposed at the upper portion inside a handle portion 2b that integrally extends at substantially the right angle from the body 2a of the housing 2. A switch circuit 8 is disposed under the trigger 8a. A control circuit board 9 having a function of controlling the speed of the motor 3 by pulling the trigger 8a is accommodated at the lower portion inside the handle portion 2b, and is electrically connected to the battery 11 and the trigger 8a. The control circuit board 9 is connected to the inverter circuit board 12 through a signal line. The battery 11, such as a NiCad battery or a lithium ion battery, is detachably mounted under the handle portion 2b.

The rotating-hitting mechanism 21 includes a planetary gear reduction mechanism 22, a spindle 27, and a hammer 24, and the rear end is held by a bearing 20 and the front end is held by a metal 29. As the trigger 8a is pulled and the motor 3 is activated, the motor starts to rotate in a direction set by a forward-backward switching lever 10, and the rotation force is reduced by the planetary gear reduction mechanism 22 and transmitted to the spindle 27, such that the spindle 27 is rotated at a predetermined speed. The spindle 27 and the hammer 24 are connected by a cam mechanism, which is configured of a V-shaped spindle cam groove 25 formed on the outer circumferential surface of the spindle 27, a hammer cam groove 28 formed on the inner circumferential surface of the hammer 24, and a ball 26 fitted in the spindle cam grooves 25 and 28.

The hammer 24 is constantly biased in a forward direction by a spring 23. When the hammer 24 is stopped, there is a gap between the hammer 24 and the end surface of an anvil 30 by the fitting of the ball 26 with the spindle cam grooves 25 and 28. On each of the rotational planes of the hammer 24 and the anvil 30, which faces each other, protrusions (not shown) are symmetrically formed at two positions.

As the spindle 27 is rotated, the rotation is transmitted to the hammer 24 through the cam mechanism, and before the hammer 24 is rotated halfway around, the protrusion of the hammer 24 is coupled to the protrusion of the anvil 30 to rotate the anvil 30. At this time, the spindle 27 and the hammer 24 rotate relatively to each other by the coupling reaction force, the hammer 24 starts to move backward to the motor while pressing the spring 23 along the spindle cam groove 25 of the cam mechanism.

When the protrusion of the hammer 24 slides over the protrusion of the anvil 30 by the backward movement of the hammer 24 to release the coupling between the hammer 24 and the anvil 30, the hammer 24 is moved forward by, in addition to the rotation force of the spindle 27, the pressing force of the spring 23 while being rapidly accelerated in the rotation direction and the forward direction by the elastic energy accumulated in the spring 23 and the operation of the cam mechanism. Then, the protrusion of the hammer 24 is coupled again to the protrusion of the anvil 30 and starts to rotate integrally. Since a strong rotating-hitting force is applied to the anvil 30 in this process, the rotating-hitting force is transmitted to a screw through a front-end tool (not shown) mounted in the mounting hole 30a of the anvil 30. Thereafter, the same operations are repeated and the rotating-hitting force is intermittently transmitted to the screw from the front-end tool, such that the screw is inserted into and tightened with an object to be fastened (not shown), such as wood.

FIG. 2 is a side view showing the external appearance of the impact driver 1 according to the present exemplary embodiment. In FIG. 2, an intake slit 17b is formed on the outer circumferential surface of the inverter circuit board 12 of the body 2a of the housing 2 and slits 18 are formed on the outer circumferential surface of the rotor fan 13.

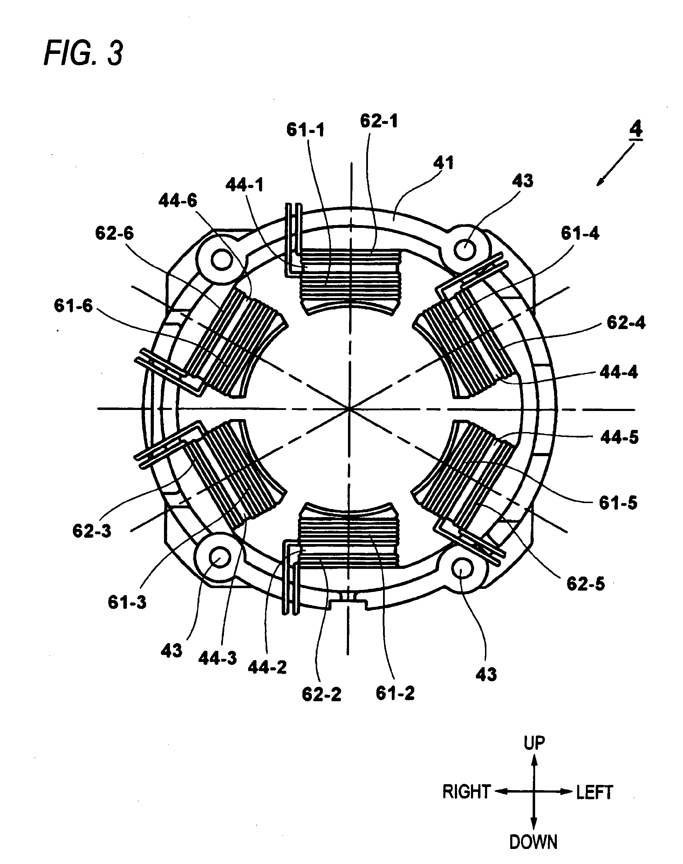

Next, the state of coils arranged with respect to the stator according to the present exemplary embodiment is described with reference to FIG. 3. The stator 4 has six teeth 44-1 to 44-6 on the inner circumference of a stator core 41 having a substantially cylindrical external shape and a coil 6 is configured by winding copper wires on the teeth. In the exemplary embodiment, the coil 6 is constituted by coils 61-1 to 61-6 wound on the inner circumferential surfaces of the teeth 44-1 to 44-6 and coils 62-1 to 62-6 wound on the outer circumferential surfaces of the teeth. The coils 61-1 to 61-6 are connected by star connection to form U-phase, V-phase, and W-phase. Similarly, the coils 62-1 to 62-6 are connected by star connection to form U1-phase, V1-phase, and W1-phase.

Current controlled at an electrical conduction period of 120 degrees in electrical angle based on a position detection signal of the position detection element 33 is supplied to the coil 61 (U-phase, V-phase, and W-phase) or the coil 62 (U1-phase, V1-phase, and W1-phase) through the switching element 14. Though not shown in FIG. 3, the rotary shaft 7 and the rotor 5 are rotatably held on the inner circumferential surface of the stator 4. The inner circumferential surfaces of the teeth 44-1 to 44-6 are positioned with a small gap spaced apart from the outer circumferential surface of the cylindrical rotor 5, and the shapes of the inner circumferential surfaces of the teeth are curved to correspond to the outer circumferential surface of the rotor 5.

It is preferable to manufacture the stator core 41 in a stacked metal core made by die-cutting a high-silicon steel plate to form six teeth 44-1 to 44-6, as shown in FIG. 3, and then axially stacking them. Four screw holes 43 for fixing the inverter circuit board 12 to the motor 3 are formed at the stator core 41.

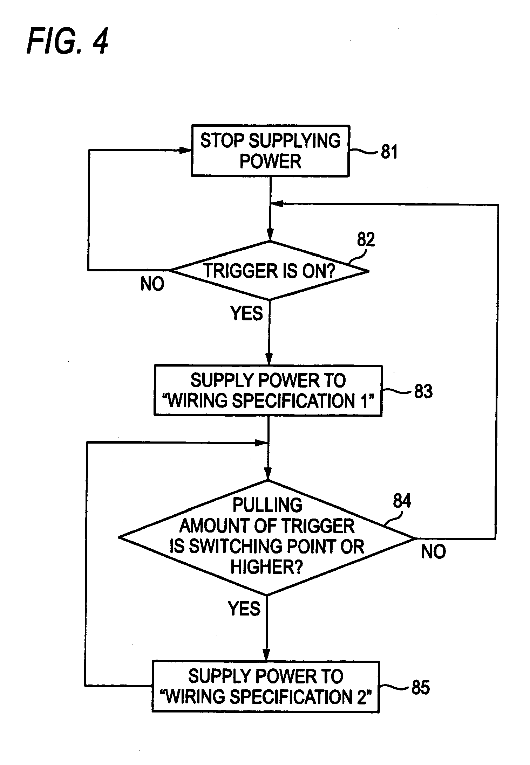

Next, the control procedure of the impact driver 1 according to the present exemplary embodiment is described with reference to the flowchart of FIG. 4. In the impact driver 1 of the present exemplary embodiment, any set of the first coil (coils 61-1 to 61-6) and the second coil (coils 62-1 to 62-6) is selected as the coil being conducted in accordance with the pulling amount (pulling value) of the trigger 8a.

When the trigger 8a is not pulled after the battery 11 is mounted in the impact driver 1, power is not supplied to the coils of the motor 3, such that the motor 3 is stopped (step 81). In this state, the control unit detects whether the trigger 8a is pulled by a worker, that is, the trigger switch is turned ON, after the worker puts the front-end tool on a fastener, such as a screw (step 82). When the switch is turned ON, power is supplied in a "wiring specification 1" for supplying voltage to the coils 61-1 to 61-6 (step 83). When the trigger is not turned ON at step 82 The process returns to step 81.

The control unit monitors the pulling amount of the trigger 8a by the worker and determines whether the pulling amount of the trigger 8a is equal to a predetermined threshold value, which is a "trigger pulling amount switching point", or more (step 84). When it is determined that the monitored trigger pulling amount is equal to or larger than the switching point, power is supplied in a "wiring specification 2" for supplying driving voltage to the coils 62-1 to 62-6 and the process returns to step 84 (step 85). At step 84, when the pulling amount of the trigger 8a is equal to or smaller than the switching point at step 84, the process returns to step 82.

When the worker releases the trigger 8a after the control at step 85, the pulling amount of the trigger becomes the switching point or less at step 84, such that the process returns to step 82. At step 82, the trigger 8a is turned OFF, such that the process returns to step 81, which is a standby state.

As described above, in the present exemplary embodiment, it is possible to switch the coil of the motor to be used based on the pulling amount of the trigger 8a. For example, a switching is performed to a coil for a high-torque output in a low revolution area, and another switching is performed to a coil for high-revolution output when the pulling amount of the trigger 8a is equal to or larger than the predetermined value. As a result, the output characteristics of the motor can readily be switched without requiring complicated switching operations, thereby realizing an electric power tool that is suitable for various purposes.

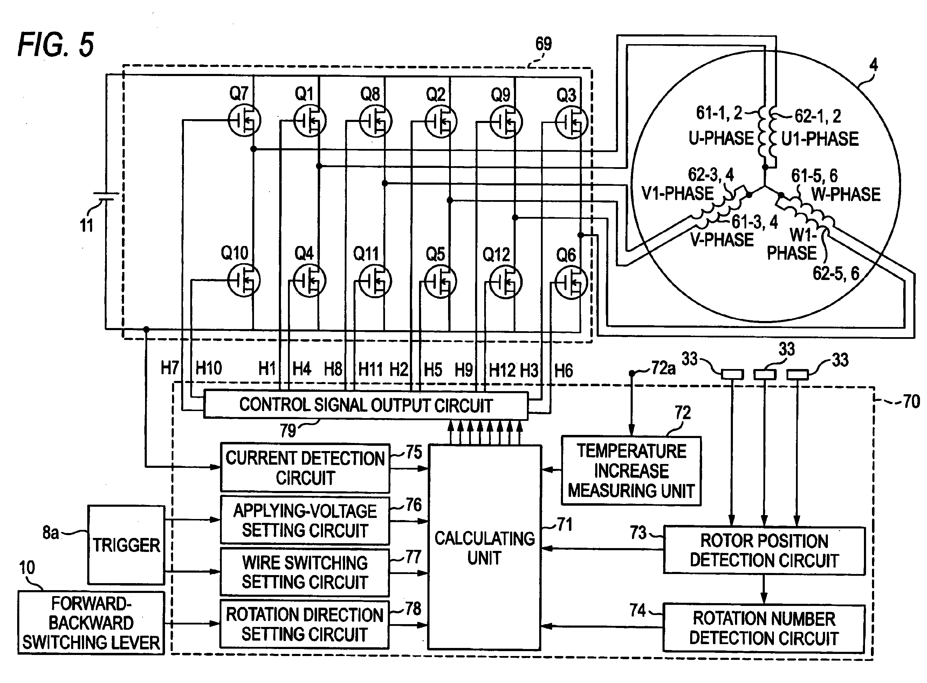

Next, the configuration and operation of the driving control system of the motor 3 are described with reference to FIG. 5. FIG. 5 is a block diagram showing the configuration of the driving control system of a motor, and in the present exemplary embodiment, the motor 3 is a three-phase brushless DC motor. The brushless DC motor is a so-called inner rotor type, which includes the rotor 5 (see FIG. 1) having plural (two in the present exemplary embodiment) sets of magnets 5a (see FIG. 1) with an N-pole and an S-pole, the stator 4 configured by two sets of three-phase stator windings (U-phase, V-phase, W-phase, and U1-phase, V1-phase, and W1-phase), which are star-connected, and three position detection elements 33 disposed circumferentially with predetermined intervals, for example, at 60 degrees, to detect the rotational position of the rotor 5. Electrical conduction direction and time for the stator windings (U-shape, V-shape, and W-shape, and U1-phase, V1-phase, and W1-phase) are controlled based on rotational position detection signals from the position detection elements 33, thereby rotating the motor 3. The position detection elements 33 are disposed on the inverter circuit board 12 at a position opposed to the magnets 5a of the rotor 5.

The electronic components mounted on the inverter circuit board 12 include twelve switching elements Q1 to Q12, such as FETs connected in a three-phase bridge type. Although a common inverter circuit uses six switching elements Q1 to Q6 and stator windings (U-phase, V-phase, and W-phase), in the motor 3 of the present exemplary embodiment, the stator windings (U1-phase, V1-phase, and W1-phase) which are star-connected to the stator 4 are additionally provided and two sets of coils are connected in parallel. Six switching elements Q7 to Q12 are further provided in comparison to the related art.

The gates of the twelve switching elements Q1 to Q12, which can be connected in a bridge type, are connected to a control signal output circuit 79 mounted on the control circuit board 9 while the drains or the sources of the switching elements Q1 to Q12 are connected to the U-phase, V-phase, W-phase, U1-phase, V1-phase, and W1-phase of the star-connected stator windings. Accordingly, the switching elements Q1 to Q12 are switched by switching element driving signals (driving signals of H4, H5, and H6 or driving signals of H10, H11, and H12) inputted from the control signal output circuit 79 to supply DC voltage of a battery 11, which is applied to the inverter circuit 69, to the stator windings U-phase, V-phase, and W-phase as three-phase (U-phase, V-phase, and W-phase) voltage Vu, Vv, and Vw or to the stator windings U1-phase, V1-phase, and W1-phase as three-phase (U1-phase, V1-phase, and W1-phase) voltage Vu1, Vv1, and Vw1.

When the trigger manipulation amount (stroke) of the trigger 8a is equal to or less than a predetermined value, six switching elements Q1 to Q6 are selected, and among the switching element driving signals (three-phase signals) driving the gates of the six switching elements, three negative power side switching elements Q4, Q5, and Q6 are supplied with pulse width modulation signals (PWM signals) H4, H5, and H6. The supplying amount of power for the motor 3 is adjusted by changing the pulse widths (duty ratio) of the PWM signals based on detection signals of the manipulation amount (stroke) of the trigger 8a, by the calculating unit 71 mounted on the control circuit board 9. In this state, since the switching elements Q7 to Q12 are not turned ON, the driving voltage is not supplied to the U1-phase, V1-phase, and W1-phase.

Similarly, when the manipulation amount (stroke) of the trigger 8a is equal to or more than a predetermined value, six switching elements Q7 to Q12 are selected, and among the switching element driving signals (three-phase signals) driving the gates of the six switching elements, three negative power side switching elements Q10, Q11, and Q12 are supplied with PWM signals H10, H11 and H12. The power supply amount for the motor 3 is adjusted by changing the pulse widths (duty ratio) of the PWM signals based on detection signals regarding the manipulation amount (stroke) of the trigger 8a, by the calculating unit 71 mounted on the control circuit board 9. In this state, since the switching elements Q1 to Q6 are not turned ON, the driving voltage is not supplied to the U-phase, V-phase, and W-phase.

Here, the PWM signals are supplied to one of the positive power side switching elements Q1 to Q3 and the negative power side switching elements Q4 to Q6 of the inverter circuit 69, and a high-speed switching is performed for the switching elements Q1 to Q3 or the switching elements Q4 to Q6. As a result, the power to be supplied for the stator windings U-phase, V-phase, and W-phase from the DC voltage of the battery 11 is controlled. Similarly, the PWM signals are supplied to one of the positive power side switching elements Q7 to Q9 and the negative power side switching elements Q10 to Q12 of the inverter circuit 69, and a high-speed switching is performed for the switching elements Q7 to Q9 or the switching elements Q10 to Q12. As a result, the power to be supplied for the stator windings U1-phase, V1-phase, and W1-phase from the DC voltage of the battery 11 is controlled.

Meanwhile, in the present exemplary embodiment, as described above, the objects to which the switching element driving signals are supplied from the control signal output circuit 79 are controlled to be switched to one of Q1 to Q6 and Q7 to Q12. This switching is performed by software control using a microcomputer (not shown) included in the calculating unit 71. In the present exemplary embodiment, since the PWM signals are supplied to the negative power side switching elements Q4 to Q6 or Q10 to Q12 among the group of the switched switching elements, it is possible to control the rotation speed of the motor 3 by adjusting the power supplied for the stator windings U-phase, V-phase, W-phase or the U1-phase, V1-phase, W1-phase, by controlling the pulse widths of the PWM signals.

A forward-backward switching lever 10 for changing the rotation direction of the motor 3 is provided to the impact driver 1, and a rotation direction setting circuit 78 changes the rotation direction of the motor 3 and transmits the control signal to the calculating unit 71 every time a change of the forward-backward switching lever 10 is detected. The calculating unit 71, though not shown, includes a CPU that outputs driving signals based on a processing program and data, a ROM that stores the processing program or the control data, a RAM that temporarily stores data, and a timer.

The control signal output circuit 79 generates driving signals for alternately switching predetermined switching elements Q1 to Q6 or Q7 to Q12 based on the output signals of the rotation direction setting circuit 78 and the rotor position detection circuit 73, and outputs the driving signals to the control signal output circuit 79. Accordingly, driving current is alternately supplied to predetermined coils of the stator windings U-phase, V-phase, and W-phase or the U1-phase, V1-phase, and W1-phase, such that the rotor 5 is rotated in the set rotation direction. In this case, the driving signals applied to the negative power side switching elements Q4 to Q6 of the inverter circuit 69 are outputted as PWM modulation signals based on the output control signal of an applying-voltage setting circuit 76. The current value supplied to the motor 3 is measured by a current detection circuit 75 and the measured value is fed back to the calculating unit 71 and adjusted to be the set driving power. Meanwhile, the PWM signals may be supplied to the positive power side switching elements Q1 to Q3 or Q7 to Q9.

A temperature sensor 72a that measures the temperature of the switching elements Q1 to Q12 is provided to the inverter circuit 69, and a temperature increase measuring circuit 72 keeps monitoring the temperature of the switching elements Q1 to Q12 or their surroundings. The monitored values are outputted to the calculating unit 71. The calculating unit 71 restricts rotation of the motor 3 or stops the motor 3 by making a warning when it is determined that the temperature has increased to a predetermined reference value or higher.

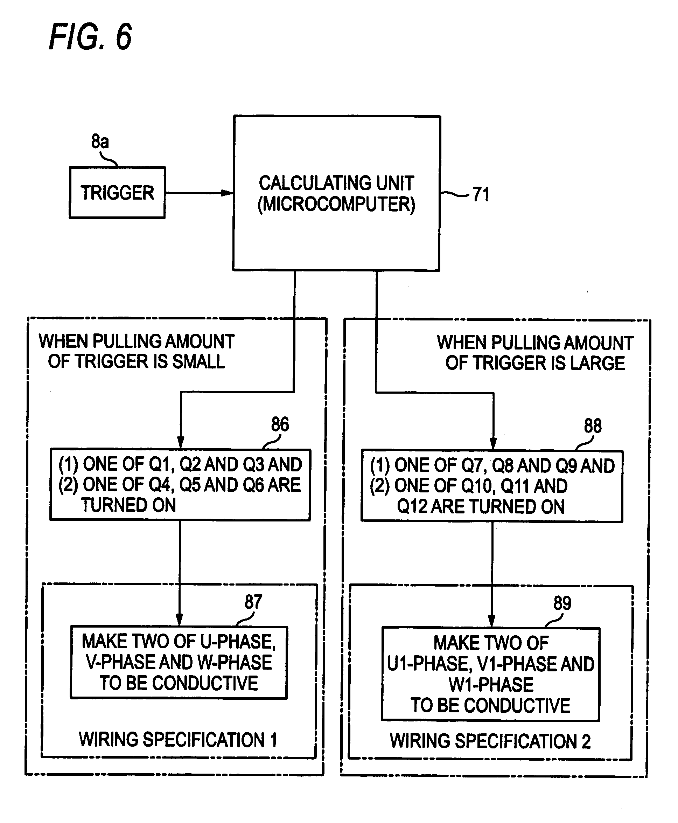

Next, the control switching element of the motor 3 according to the present exemplary embodiment is described with reference to FIG. 6. When the trigger 8a is pulled by a predetermined amount, the signal is inputted to the calculating unit 71 through the applying-voltage setting circuit 76 (see FIG. 5). The pulling amount of the trigger 8a is detected by a wire switching setting circuit 77 (see FIG. 5) and it is monitored whether the pulling amount exceeds a predetermined amount.

When the pulling amount of the trigger is small, as shown in the box 86, control of turning ON one of the switching elements Q1 to Q3 and the switching elements Q4 to Q6 is performed. The control allows the motor 3 to rotate by using only the stator windings U-phase, V-phase, and W-phase, such that the output of the position detection element 33 is functioned to make two of the U-phase, V-phase, and W-phase to be conductive with each other by the trigger, as shown in the box 87. The stator windings U-phase, V-phase, and W-phase are coils that are suitable for low-speed rotation of the rotor 5 and it is possible to achieve high rotation torque by using the stator windings.

When the pulling amount of the trigger is large, as shown in the box 88, control of turning ON any one of the switching elements Q7 to Q9 and Q10 to Q12 is performed. The control allows the motor 3 to rotate by using only the stator windings U1-phase, V1-phase, and W1-phase, such that the output of the position detection element 33 is functioned to make two of the U1-phase, V1-phase, and W1-phase to be conductive with each other by the trigger, as shown in the box 89. The stator windings U1-phase, V1-phase, and W1-phase are coils that are suitable for low-speed rotation of the rotor 5. The motor can be rotated at high speed by using them. Therefore, it is possible to achieve high rotation torque, and hit an object at a high speed, thereby achieving a high coupling torque.

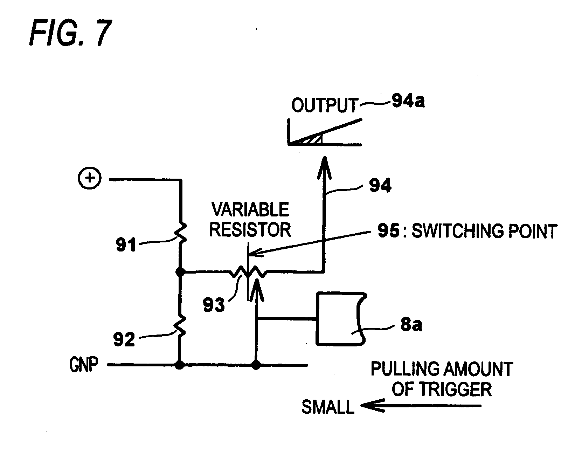

FIG. 7 is a circuit diagram showing the internal structure of the switch circuit 8 connected with the trigger 8a. In the switch circuit 8, a variable resistor 93 is connected between two resistors 91 and 92 which are connected between the ground GND and the plus terminal of the power source. The variable resistor 93 is one in which the value of its resistance changes in accordance with the slide amount of a slider connected to the trigger 8a, and the output voltage of the ground GND and an output terminal 94 is changed in accordance with the pulling amount of the trigger 8a. In the present exemplary embodiment, whether the slide amount exceeds a switching point 95, which is a threshold value of switching, is determined, and when the slide amount does not exceed the switching point 95 (from the low to middle speed rotation domain of the motor 3), driving current is controlled to be supplied only to the stator windings U-phase, V-phase, and W-phase, thereby rotating the motor 3. In FIG. 7, the pulling amount of the trigger 8a is small and does not reach the switching point 95. Therefore, only the driving current is supplied only to the stator windings U-phase, V-phase, and W-phase.

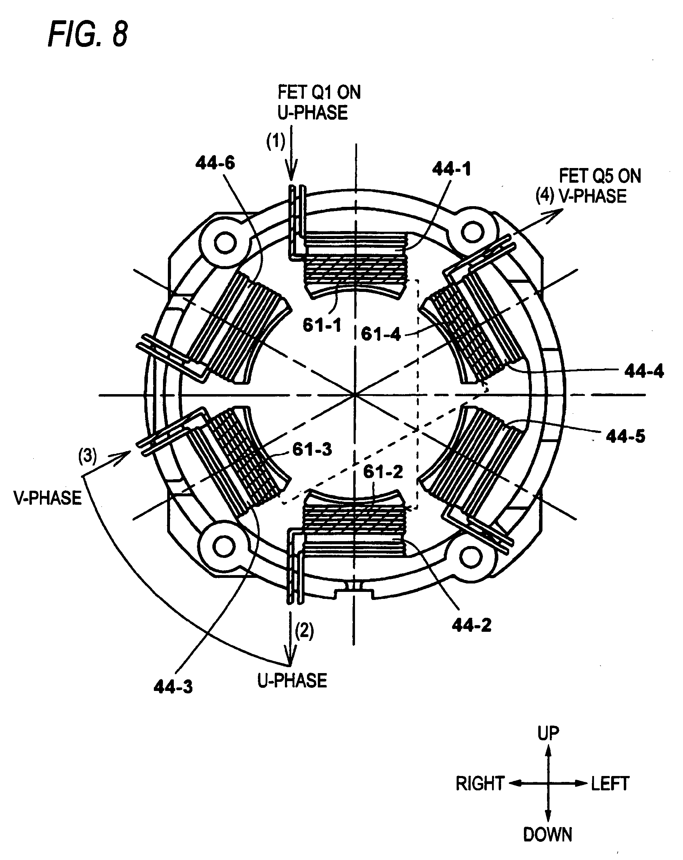

FIG. 8 shows a situation where current is supplied to the coil 6 when a pulling amount of the trigger 8a in FIG. 7 is small. FIG. 8 shows that driving current flows to the U-phase (61-1 and 61-2), as in the direction from symbol (1) to symbol (2), at a rotational position of the rotor 5, and flows toward the V-phase (61-3 and 61-4) connected with symbol (2), as in the direction from symbol (3) to symbol (4). A feature of the present invention is that the driving current does not flow to the outer coils 62-1 to 62-4 (U1-phase and V1-phase) wound on the teeth 44-1 to 44-4. Therefore, when the pulling amount of the trigger 8a is small, the teeth 44-1 to 44-4 are excited only by the inner coils 61-1 to 61-6.

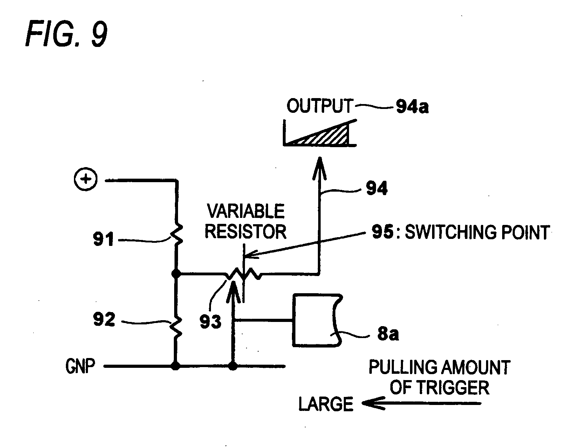

Next, descriptions will be made for the control when the pulling amount of the trigger 8a is large. FIG. 9 is a circuit diagram of the switch circuit 8 which shows that the pulling amount of the trigger 8a has increased from the state shown in FIG. 7. As the pulling amount of the trigger 8a increases, the slide amount exceeds the switching point 95, such that the rotation domain of the motor 3 becomes the high-speed section from the middle-speed section. In this process, the calculating unit 71 switches the coils to which the driving current is supplied from the coils 61-1 to 61-6 (U-phase, V-phase, and W-phase) to the coils 62-1 to 62-6 (U1-phase, V1-phase, and W-phase) to rotate the motor 3.

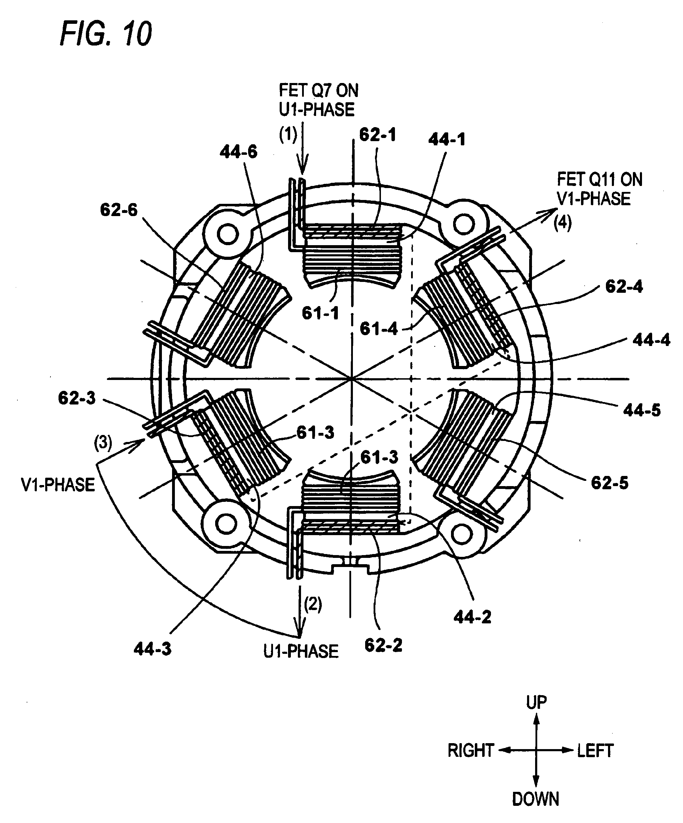

FIG. 10 shows a situation where current is supplied to the coil 6 when the coils are switched to the stator windings U1-phase, V1-phase, and W1-phase. FIG. 10 shows that driving current flows to the U1-phase (62-1 and 62-2), as in the direction from symbol (1) to symbol (2) at a rotational position of the rotor 5, and flows toward the V1-phase (62-3 and 62-4) connected with symbol (2), as in the direction from symbol (3) to symbol (4). A feature of the present invention is that the driving current does not flow to the inner coils 61-1 to 61-4 (U-phase and V-phase) wound on the teeth 44-1 to 44-4. Therefore, when the pulling amount of the trigger 8a is large, the teeth 44-1 to 44-6 are excited only by the outer coils 62-1 to 62-6.

As described above, according to the present exemplary embodiment, since the coil for conducting is selected in accordance with the position of the trigger 8a, it is possible to change the characteristics of the motor 3 in accordance with the pulling amount of the trigger 8a. That is, current is supplied to the first set of coils 61-1 to 61-6, which has a large number of turns, when the pulling amount of the trigger 8a is small, and current is supplied to the second set of coils 62-1 to 62-6, which has a small number of turns, when the pulling amount of the trigger 8a is large. Therefore, it is possible to realize a motor for high torque and low rotation when the pulling amount of the trigger 8a is small, and to realize a motor for low torque and high rotation when the pulling amount is large. Therefore, since it is possible to further make use of the characteristic of the motor 3 that changes according to the rotation area, it is possible to realize an electric power tool that a worker can easily use. Since the switching from the first set of coils to the second set of coils is controlled by the pulling amount of the trigger 8a, the switching can be definitely performed and an electric power tool with high reliability can be realized.

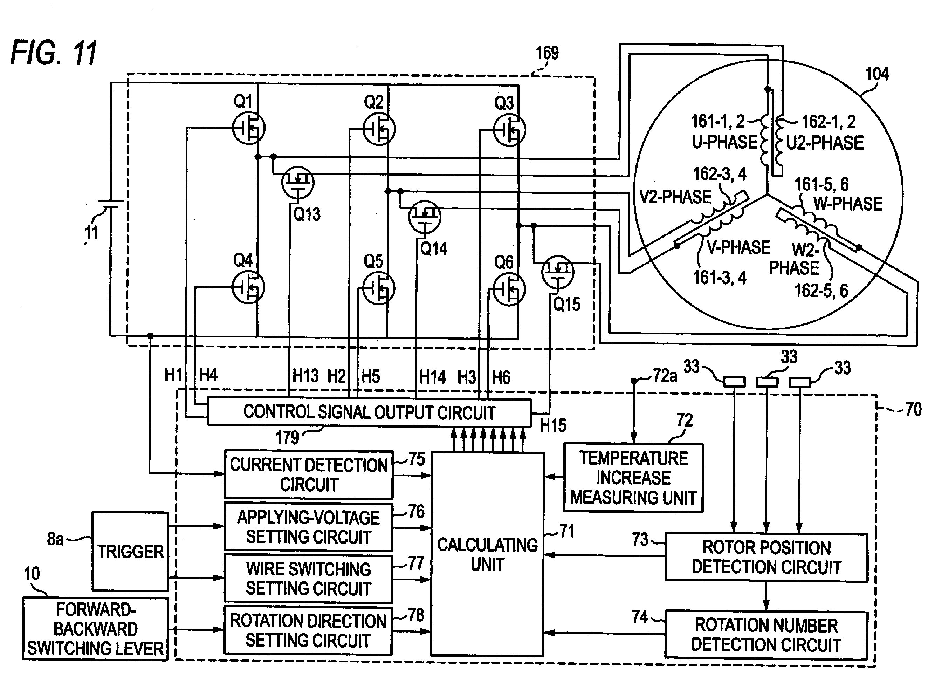

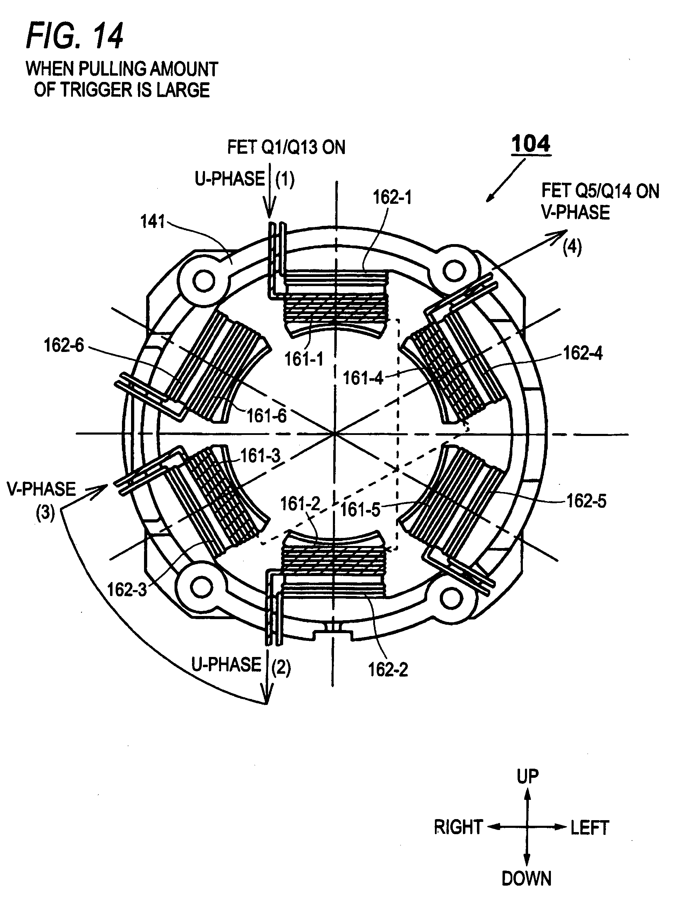

Next, a second exemplary embodiment of the present invention will be described with reference to FIGS. 11 to 14. The connection method of coils of the second exemplary embodiment is different from that of the first exemplary embodiment. That is, a second set of coils can be connected in series to the first set of coil, which has been used in related-art.

FIG. 11 is a block diagram showing the circuit configuration of the driving control system of a motor 3 according to the second exemplary embodiment of the present invention, in which the same configurations as those in the block diagram shown in FIG. 5 are given with the same reference numerals. In the second exemplary embodiment, the motor is a three-phase brushless DC motor, which includes the rotor 5 (see FIG. 1) having a plurality sets of magnets 5a (see FIG. 1) with an N-pole and an S-pole, and the stator 104 implemented by two sets of three-phase stator windings (U-phase, V-phase, W-phase, and U1-phase, V1-phase, W1-phase), which are star-connected. The three-phase brushless DC motor further includes three position detection elements 33 disposed circumferentially with predetermined intervals, for example, at 60 degrees, to detect the rotational position of the rotor 5. Electrical conduction direction and time for the stator windings (U-shape, V-shape, W-shape, and U1-phase, V1-phase, and W1-phase) are controlled based on rotational position detection signals from the position detection elements 33.

In the motor of the present exemplary embodiment, stator windings U2-phase, V2-phase, and W2-phase are further connected in series to the stator windings U-phase, V-phase, and W-phase, which are star-connected to a stator 104. In the electronic components included in the inverter circuit 169, six switching elements Q1 to Q6, such as FETs connected in a three-phase bridge type, are included. In the second exemplary embodiment, both ends of the stator wires U2-phase, V2-phase, and W2-phase which are connected in series are short-circuited, and three switching elements Q13 to Q15 are disposed to stop excitation of the stators wires U2-phase, V2-phase, and W2-phase. When the three switching elements Q13 to Q15 are turned ON and power is supplied to be conductive, the stator 104 is driven only with the stator windings U-phase, V-phase, and W-phase. When the three switching elements Q13 to Q15 are turned OFF and power is not supplied to be non-conductive, the stator 104 operates with the stator windings U-phase, V-phase, and W-phase being connected in series with the stator windings U2-phase, V2-phase, and W2-phase.

The gates of the six switching elements Q1 to Q6, which can be connected in a bridge type, are connected to a control signal output circuit 179 mounted on a control circuit board 9, while the drains or the sources of the switching elements Q1 to Q6 are connected to the stator windings U2-phase, V2-phase, and W2-phase. Accordingly, the switching elements Q1 to Q6 are switched by switching element driving signals (driving signals of H4, H5, and H6) inputted from the control signal output circuit 79 and DC voltage of a battery 11 which is applied to the inverter circuit 169 is supplied to the stator windings U-phase, V-phase, and W-phase as three-phase (U-phase, V-phase, and W-phase) voltage Vu, Vv, and Vw, or to the stator windings the U-phase + U2-phase, V-phase + V2-phase, and W-phase + W2-phase as three-phase voltage.

When the manipulation amount (stroke) of the trigger 8a is equal to or less than a predetermined value, the switching elements Q13 to Q15 are turned OFF and the stator 104 is excited with the stator windings U-phase, V-phase, and W-phase connected in series with the stator windings U2-phase, V2-phase, and W2-phase. In driving of the switching elements Q1 to Q6, three negative power side switching elements Q4, Q5, and Q6 are driven with PWM signals H4, H5, and H6, and the amount of power supplied to the motor is adjusted by changing the pulse width (duty ratio) of the PWM signals by the calculating unit 71 mounted on the control circuit board 9, based on detection signals of the manipulation amount (stroke) of the trigger 8a.

Similarly, when the manipulation amount (stroke) of the trigger 8a is equal to or more than a predetermined value, the switching elements Q13 to Q15 are turned ON and the stator 104 is excited only with the stator windings (U-phase, V-phase, and W-phase). In driving of the switching elements Q1 to Q6, three negative power side switching elements Q4, Q5, and Q6 are driven with PWM signals H4, H5, and H6, and the amount of power supplied to the motor is adjusted by changing the pulse width (duty ratio) of the PWM signals by the calculating unit 71 mounted on the control circuit board 9, based on detection signals of the manipulation amount (stroke) of the trigger 8a.

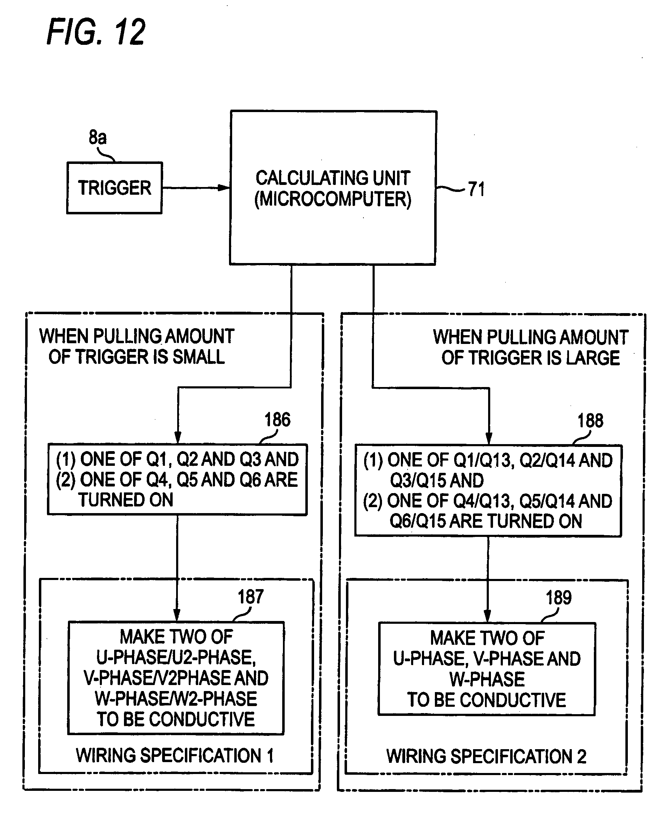

Next, the control switching sequence of the motor 3 according to the present exemplary embodiment is described with reference to FIG. 12. When the trigger 8a is pulled at a predetermined amount, the signal is inputted to the calculating unit 71 through the applying-voltage setting circuit 76 (see FIG. 11). The pulling amount of the trigger 8a is detected by a winding switching setting circuit 77 (see FIG. 11) to monitor whether the pulling amount exceeds a predetermined amount.

When the pulling amount of the trigger is small, as shown in the box 186, control that turns ON any one of the switching elements Q1 to Q3 and turns ON any one of the switching elements Q4 to Q6 is performed. In the control, the excitation is generated in the series connection of the stator windings U-phase, V-phase, and W-phase and the stator windings U2-phase, V2-phase, and W2-phase, as shown in the box 187. Accordingly, it is possible to achieve the number of turns suitable for a low-speed rotation to obtain a high torque.

When the pulling amount of the trigger is large, as shown in the box 188, a control is performed to turn ON any one of the switching elements Q1 to Q3 and Q13 to Q15. In the control, as shown in the box 189, the motor 3 is rotated by using only the stator windings U-phase, V-phase, and W-phase. Accordingly, the number of turns of coils decreases in comparison to the series connection shown in the box 187. Therefore, although torque is decreased, the motor 3 can be driven with a large number of rotations. As a result, the number of rotation of the motor 3 further increases in hitting, such that it is possible to achieve a high fastening torque. Meanwhile, the switching elements Q13 to Q15 may be controlled to be turned ON/OFF in synchronization with the switching elements Q1 to Q6 that are turned ON, or the switching elements Q13 to Q15 may keep turned ON when the pulling amount of the trigger is large.

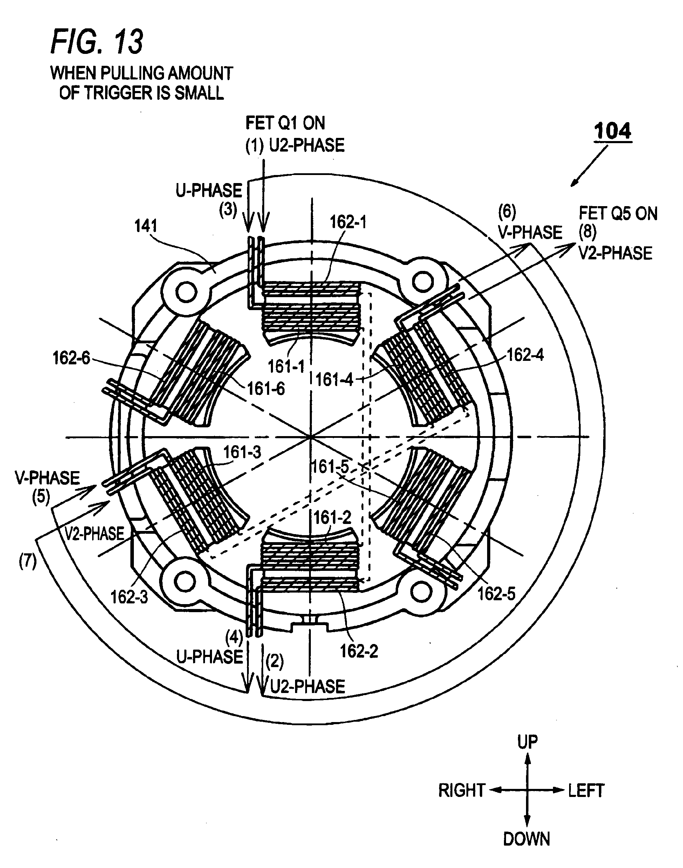

FIG. 13 shows a situation where current is supplied to the coil, with a small pulling amount of the trigger 8a in the second exemplary embodiment. When the pulling amount of the trigger 8a is small, the driving current at a rotational position of the rotor 5 flows to the U2-phase (162-1 and 162-2), as in the direction from symbol (1) to symbol (2), flows to the U-phase (161-1 and 161-2) connected in series, as in the direction of from symbol (3) to symbol (4), and then flows toward the V-phase (161-3 and 161-4) connected with symbol (4), as in the direction from symbol (5) to symbol (6), and then flows to the V2-phase (162-3 and 162-4) connected in series, as in the direction from symbol (7) to symbol (8). A feature of the present invention is that the driving current flows in series to both the outer coils 162-1 to 162-4 (U2-phase and V2-phase) and the inner coil 161-1 to 161-4 (U-phase and V-phase), which are wound on the teeth 144-1 to 144-4. Therefore, when the pulling amount of the trigger 8a is small, the teeth 144-1 to 144-6 are excited at both the inner coils 161-1 to 161-6 and the outer coils 162-1 to 162-6.

Next, control a situation where the pulling amount of the trigger 8a is large will be described. When the pulling amount of the trigger 8a increases, the driving current at any rotational position of the rotor 5 flows only to the U-phase (161-1 and 161-2) in those connected in series, as in the direction from symbol (1) to symbol (2), and then flows only to the V phase (161-3 and 161-4) connected with symbol (2), as in the direction from symbol (3) to symbol (4). A feature of the present invention is that the driving current does not flow to the outer coils 162-1 to 162-4 (U2-phase and V2-phase) wound on the teeth 144-1 to 44-4. Therefore, when the pulling amount of the trigger 8a is large, the teeth 144-1 to 44-4 are excited only at the inner coils 161-1 to 161-6.

As described above, in the second exemplary embodiment, when the pulling amount of the trigger is small, the motor is driven with a large number of turns. When the pulling amount of the trigger is large, the motor is driven with a small number of turns. Accordingly, a motor for a high torque and a low rotation is realized when the pulling amount of the trigger is small, and a motor for low torque and high rotation is realized when the pulling amount of the trigger is large. Therefore, it is possible to realize an electric power tool that can be easily used.

The present invention has been described based on the above described exemplary embodiments, but the present invention is not limited thereto, and may be modified in various ways without departing from the spirit of the invention. The switching of electrical conduction to the coils of the motor is performed based on the pulling amount of the trigger in the first and second exemplary embodiments. However, the switching may be performed by factors, other than the pulling amount of the trigger. For example, a predetermined threshold value may be the number of rotation which is constantly monitored the rotation number detection circuit, and when the number of rotation equals to or less than the threshold value, electrical conduction may be made to the same coils as when the pulling amount of the trigger is small. When the number of rotation is larger than the threshold value, electrical conduction may be made to the same coils as when the pulling amount of the trigger is large.

Alternately, the current flowing in the motor may be monitored. When the current value is large, electrical conduction may be made to the same coils as when the pulling amount of the trigger is small. When the value of the current flowing in the motor is small, electrical conduction may be made to the same coils as when the pulling amount of the trigger is large.

Further, in an impact driver as in the present invention, when hitting sensors (sound sensor, vibration sensor, and acceleration sensor) are disposed and the hitting sensors determine that hitting is performed, electrical conduction may be made to the same coils as when the pulling amount of the trigger is small. When the hitting sensors determine that hitting is not performed, electrical conduction may be made to the same coils as when the pulling amount of the trigger is large.

### Industrial Applicability

According to an aspect of the invention, there is provided an electric power tool that includes a motor including a plurality of coils and the motor can be controlled by efficiently switching between the coils in accordance with work situations.

## Claims

1. An electric power tool (1) comprising:
a motor (3) including,
a stator (5) including teeth (44), and
a rotor (5) rotatable with respect to the stator (5);
a front-end tool (7) connected to the stator (5) and is configured to be driven;
a housing (2) configured to accommodate the motor a calculating unit (71) and sensors (72,73,74,75); and
a trigger switch (8a) configured to adjust rotation of the motor (3),
wherein a first coil (61) and a second coil (62), which is different from the first coil (61), are wound on the teeth (44), and
**characterized in that**:
when a pulling amount of the trigger switch (8a) is less than a predetermined threshold value, electrical conduction to one of the first coil (61) and the second coil (62) is made, wherein when the pulling amount of the trigger switch (89) is equal to or more than the predetermined threshold value, electrical conduction to the other one of the first coil (61) and the second coil (62) is made, and wherein the calculating unit (71) selects the coils based on the signals from the trigger switch (8a) and adjusts the speed based on the signals from the trigger switch (8a) and the sensors.

2. The electric power tool (1) of claim 1, further comprising:
a driving circuit (12) configured to supply driving voltage to the coils (61, 62) of the motor (3); and
a control unit (9) configured to control operation of the driving circuit (12); and
wherein the control unit (9) is configured to control supply of the driving voltage such that:
the control unit (9) supplies the driving voltage to one of the first coil (61) and the second coil (62) when a pulling amount of the trigger switch (89) is less than a predetermined threshold value; and
the control unit (9) supplies the driving voltage to the other one of the first coil (61) and the second coil (62) when the pulling amount of the trigger switch (89) is equal to or more than the predetermined threshold value.

3. The electric power tool (1) of claim 1,
wherein the first coil (61) and the second coil (62) are connected in parallel.

4. The electric power tool (1) of claim 3,
wherein a rotation speed of the motor is controlled to be changed in accordance with the pulling amount of the trigger switch (89), and
wherein the driving voltage is supplied to the first coil (61) when the pulling amount of the trigger switch is less than a threshold value and the driving voltage is supplied to the second coil (62) when the pulling amount is equal to or more than the threshold value.

5. The electric power tool (1) of claim 1,
wherein the first coil (161) and the second coil (162) are connected in series, and
wherein the control unit performs switching between a first state of conducting only the first coil and a second state of conducting both of the first and second coils in accordance with the pulling amount of the trigger switch.

6. The electric power tool (1) of claim 4 or 5,
wherein a number of turns of the second coil (162) is smaller than that of the first coil (161).

7. The electric power tool (1) according to any one of claims 1 to 6,
wherein the motor (3) is a brushless DC motor and the first (61;161) and second (62;162) coils are star-connected.

## Patentansprüche

1. Elektrisches Werkzeug (1), welches umfasst:
einen Motor (3), welcher umfasst:
einen Stator (5), welcher Zähne (44) umfasst, und
einen Rotor (5), welcher in Relation zum Stator (5) umdrehbar ist;
ein stirnseitiges Werkzeug (7), welches mit dem Stator (5) verbunden ist und antreibbar ist;
ein Gehäuse (2), welches dazu ausgebildet ist, den Motor, eine Berechnungseinheit (71) und Sensoren (72, 73, 74, 75) aufzunehmen; und
einen Auslöseschalter (8a), welcher dazu ausgebildet ist, die Umdrehung des Motors (3) einzustellen,
wobei eine erste Spule (61) und eine zweite Spule (62), welche sich von der ersten Spule (61) unterscheidet, auf den Zähnen (44) gewickelt sind, und
**dadurch gekennzeichnet, dass**:
wenn ein Ausmaß zum Betätigen des Auslöseschalters (8a) geringer ist als ein vorbestimmter Schwellwert, eine elektrische Leitung mit der ersten Spule (61) oder der zweiten Spule (62) hergestellt wird, wobei, wenn das Ausmaß zum Betätigen des Auslöseschalters (8a) gleich oder größer als der vorbestimmte Schwellwert ist, eine elektrische Leitung mit der weiteren von der ersten Spule (61) oder der zweiten Spule (62) hergestellt wird, und wobei
die Berechnungseinheit (71) die Spulen basierend auf den Signalen vom Auslöseschalter (8a) auswählt und die Drehzahl basierend auf den Signalen von dem Auslöseschalter (8a) und den Sensoren einstellt.

2. Elektrisches Werkzeug (1) nach Anspruch 1, ferner umfassend:
eine Antriebsschaltung (12), welche dazu ausgebildet ist, die Spulen (61, 62) des Motors (3) mit einer Antriebsspannung zu versorgen; und
eine Steuereinheit (9), welche dazu ausgebildet ist, den Betrieb von der Antriebsschaltung (12) zu steuern; und
wobei die Steuereinheit (9) dazu ausgebildet ist, die Versorgung der Antriebsspannung derart zu steuern, dass:
die Steuereinheit (9) die erste Spule (61) oder die zweite Spule (62) mit der Antriebsspannung versorgt, wenn ein Ausmaß zum Betätigen des Auslöseschalters (89) geringer ist als ein vorbestimmter Schwellwert; und
die Steuereinheit (9) die weitere von der ersten Spule (61) oder der zweiten Spule (62) mit der Antriebsspannung versorgt, wenn das Ausmaß zum Betätigen des Auslöseschalters (89) gleich oder größer ist als der vorbestimmte Schwellwert.

3. Elektrisches Werkzeug (1) nach Anspruch 1,
wobei die erste Spule (61) und die zweite Spule (62) parallel verbunden sind.

4. Elektrisches Werkzeug (1) nach Anspruch 3,
wobei eine Änderung in der Drehzahl des Motors gemäß dem Ausmaß der Betätigung des Auslöseschalters (89) gesteuert wird, und
wobei die erste Spule (61) mit der Antriebsspannung versorgt wird, wenn das Ausmaß der Betätigung des Auslöseschalters kleiner als ein Schwellwert ist, und die zweite Spule (62) mit der Antriebsspannung versorgt wird, wenn das Ausmaß der Betätigung gleich oder größer als der Schwellwert ist.

5. Elektrisches Werkzeug (1) nach Anspruch 1,
wobei die erste Spule (161) und die zweite Spule (162) seriell verbunden sind, und
wobei die Steuereinheit eine Umschaltung zwischen einem ersten Zustand einer Leitungsherstellung von lediglich der ersten Spule und einem zweiten Zustand einer Leitungsherstellung von sowohl der ersten als auch der zweiten Spule gemäß dem Ausmaß der Betätigung des Auslöseschalters durchführt.

6. Elektrisches Werkzeug (1) nach Anspruch 4 oder 5,
wobei eine Wicklungszahl der zweiten Spule (162) kleiner ist als jene der ersten Spule (161).

7. Elektrisches Werkzeug (1) nach einem der Ansprüche 1 bis 6,
wobei der Motor (3) ein bürstenloser Gleichstrommotor ist und die erste Spule (61; 161) und die zweite Spule (62; 162) sterngeschaltet verbunden sind.

## Revendications

1. Outil électrique (1) comprenant :
un moteur (3) comprenant :
un stator (5) comprenant des dents (44), et
un rotor (5) pouvant tourner par rapport au stator (5) ;
un outil d'extrémité avant (7) raccordé au stator (5) et qui est configuré pour être entraîné ;
un boîtier (2) configuré pour loger le moteur, une unité de calcul (71) et des capteurs (72, 73, 74, 75) ; et
un commutateur à gâchette (8a) configuré pour ajuster la rotation du moteur (3),
dans lequel une première bobine (61) et une seconde bobine (62) qui est différente de la première bobine (61), sont enroulées sur les dents (44), et
**caractérisé en ce que** :
lorsqu'une quantité de traction du commutateur à gâchette (8a) est inférieure à une valeur de seuil prédéterminée, on réalise la conduction électrique vers l'une parmi la première bobine (61) et la seconde bobine (62), dans lequel lorsque la quantité de traction du commutateur à gâchette (89) est égale ou supérieure à la valeur de seuil prédéterminée, on réalise la conduction électrique vers l'autre parmi la première bobine (61) et la seconde bobine (62), et moyennant quoi l'unité de calcul (71) sélectionne les rails en fonction des signaux provenant du commutateur à gâchette (8a) et ajuste la vitesse en fonction des signaux provenant du commutateur à gâchette (8a) et des capteurs.

2. Outil électrique (1) selon la revendication 1, comprenant en outre :
un circuit d'entraînement (12) configuré pour fournir la tension d'entraînement aux bobines (61, 62) du moteur (3) ; et
une unité de commande (9) configurée pour commander le fonctionnement du circuit d'entraînement (12) ; et
dans lequel l'unité de commande (9) est configurée pour commander la fourniture de la tension d'entraînement de sorte que :
l'unité de commande (9) fournit la tension d'entraînement à l'une parmi la première bobine (61) et la seconde bobine (62) lorsqu'une quantité de traction du commutateur à gâchette (89) est inférieure à une valeur de seuil prédéterminée ; et
l'unité de commande (9) fournit la tension d'entraînement à l'autre parmi la première bobine (61) et la seconde bobine (62) lorsque la quantité de traction du commutateur à gâchette (89) est égale ou supérieure à la valeur de seuil prédéterminée.

3. Outil électrique (1) selon la revendication 1,
dans lequel la première bobine (61) et la seconde bobine (62) sont raccordées en parallèle.

4. Outil électrique (1) selon la revendication 3,
dans lequel une vitesse de rotation du moteur est contrôlée afin d'être modifiée selon la quantité de traction du commutateur à gâchette (89), et
dans lequel la tension d'entraînement est fournie à la première bobine (61) lorsque la quantité de traction du commutateur à gâchette est inférieure à une valeur de seuil et la tension d'entraînement est fournie à la seconde bobine (62) lorsque la quantité de traction est égale ou supérieure à la valeur de seuil.

5. Outil électrique (1) selon la revendication 1,
dans lequel la première bobine (161) et la seconde bobine (162) sont raccordées en série, et
dans lequel l'unité de commande réalise la commutation entre un premier état de conduction uniquement de la première bobine et un second état de conduction à la fois des première et seconde bobines selon la quantité de traction du commutateur à gâchette.

6. Outil électrique (1) selon les revendications 4 ou 5,
dans lequel un nombre de tours de la seconde bobine (162) est inférieur à celui de la première bobine (161).

7. Outil électrique (1) selon l'une quelconque des revendications 1 à 6,
dans lequel le moteur (3) est un moteur sans balai à courant continu et les première (61 ; 161) et seconde (62 ; 162) bobines sont raccordées en étoile.
